# EUROPEAN PATENT APPLICATION

(11) **EP 2 505 834 A2**
(43) Date of publication of application: **03.10.2012**
(21) Application number: 12001720.7
(22) Date of filing: 14.03.2012
(51) Int. Cl.: F03D 11/04

(54) **Maintenance platform**

(30) Priority: 25.03.2011 ES 201100346
(71) Applicant: Gamesa Innovation & Technology, S.L., 31621 Sarriguren (ES)
(72) Inventor: Gomez Santamaria, David, 48170 Zamudio (Bizkaia) (ES); Gaminde Larreta, Beinat, 48170 Zamudio (Bizkaia) (ES)

(57) **Abstract**

Maintenance platform with detachable elements to facilitate its placement at any point of the ladder inside a wind turbine tower. The platform comprises a horizontal surface (1) with side skirting (4) to prevent the fall of objects, tensionable elements (5) that support it, anchors (2), secured by pins (3) to any rung on the ladder and a railing (9) anchored to the platform and reinforced by intermediate bars (14) and a plate (15). The work surface on the platform suffices for a worker and the corresponding maintenance tools.

## Description

### Object of the invention.

The present invention refers to an easily assembled platform that, together with a series of supports and fastening devices, is used on the internal ladder present in wind turbine towers. The platform is set up on the rungs of the ladder and provides a secure support for performing maintenance and other tasks at any height.

### Background of the invention.

Wind turbines are machines that harness wind energy and thus work at a certain height from the ground. They are installed on towers having different heights conditioned for the electricity that it can generate. Recent tendencies in wind turbine construction entail increased power and towers of greater height. Maintenance and inspection tasks for the various constituent elements of a wind turbine (yaw shaft, generator, gearbox, electrical devices, etc.) are conducted inside the tower with a portable ladder.

While not stable per se, the ladder is anchored to the inside wall of the tower. It basically comprises two stringers joined transversely by rungs spaced out evenly to permit a progressive ascent up the ladder to the upper part of the tower.

The risks associated to a ladder primarily entail the falling of persons or objects during handling. Both risks can be mitigated with safety measures that the worker adopts, whether with lifelines secured to a harness or with the use of a helmet to preclude blows. General recommendations point out that the use of the ladder must be limited, and only when locations do not allow for other solutions, likewise advising workers that an elevated platform should be used for performing tasks at a specific height.

Turning to wind turbines, all electrical systems pass down through the tower and can only be accessed from the ladder. Even though there are intermediate platforms, access for repair and maintenance must often be made from the ladder.

With a view to improving the worker's reach and posture for tasks required beyond the range of conventional platforms, the maintenance platform, object of this invention, has been conceived.

### Description of the invention

An object of this invention consists in providing a platform with a surface sufficiently large enough to accommodate a worker and his/her tools, and a lateral skirting to keep tools from rolling along the surface and falling off the borders of the platform.

Another object of the invention is to enable the platform to be hoisted, handled and secured easily, for which it shall be equipped with fastening hooks.

Another object of the invention consists of a platform that can be fastened to the ladder, secured thereto by safety locks that slide underneath the rung and capable of being locked into at least one position.

A further object of the invention is to be equipped with tensioned elements that support a freely hanging platform which in turn is anchored to any rung on the ladder.

The foregoing is attained with a platform that can be secured to and suspended from a ladder, with a useful surface:
- Permitting the worker to remain standing and move about in a space equivalent to a surface measuring between a third of a square meter and one and a half square meters,
- with an anti-slip relief on the upper face to prevent slipping and falling,
- with a gap between the platform and the ladder sufficiently large enough to permit the passage of power cables,
- and with some railings that create a border around the platform.

### Brief description of the drawings.

The following figures have been attached with a view to explaining how the platform is constituted, as well as its positioning with respect to the ladder:
Figure 1 shows a side view of the platform with railings and tensionable elements.
Figure 2 provides a perspective view of the horizontal surface.
Figure 3 is an illustration of the anchoring for the tensionable element to the ladder rung.
Figure 4 shows a perspective view of the platform with railings and tensionable elements.
Figure 5 shows a general perspective view of the maintenance platform mounted on the ladder.

### Description of the preferential embodiment

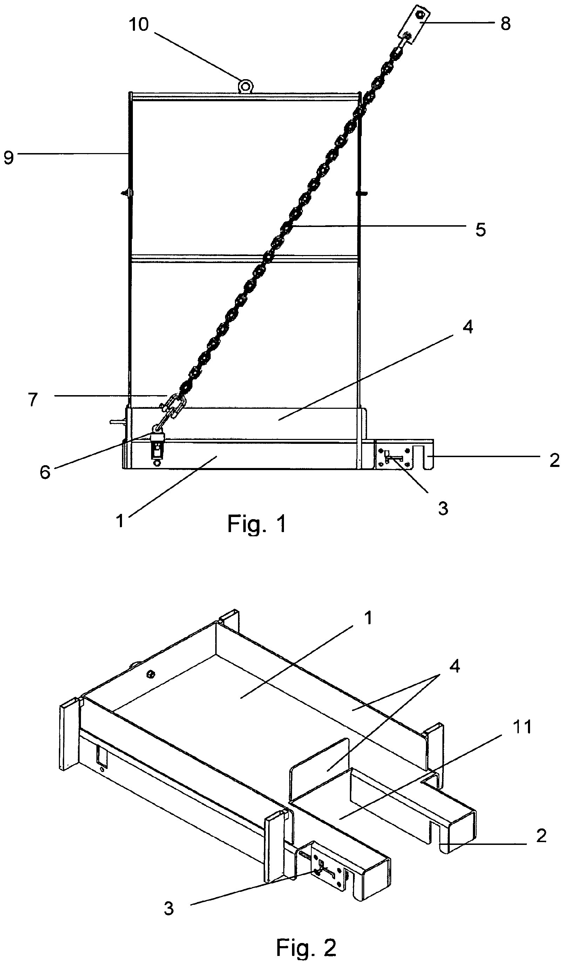

As shown in figures 1 and 2, the base of the platform forms a horizontal surface (1) with a preferably rectangular shape and space sufficing for an operator to comfortably work and move on it. Each side has anchors for the ladder (2) comprising two extensions that end in a groove into which the corresponding ladder rung is fitted. These anchors are complemented with some safety locks (3) located on the lower part of the aforementioned extensions and next to the grooves. These locks (3) are composed by some lockbolts which can be locked by lodging underneath the rung (there are two blocking positions), thus maintaining the platform immobile. The entire platform has a welded lateral skirting (4) to prevent tools that could roll on the horizontal surface (1) from falling off.

The platform is completely secured by means of some tensionable elements (5) extending from the point opposite the anchors (3) to fasten onto a rung located above the rung used for the cited anchoring. Thus, a rotating eyebolt (6) is anchored in a hollow tube that crosses through the lower part of the platform and couples with a shackle (7) to the tensionable element (5). According to the preferential embodiment, the cited tensionable element is a chain that ends in a plate (8) fastened to the corresponding rung on the ladder.

The platform is complemented with a railing (9) bordering the three exposed sides and equipped, at its top part, with a lug in the shape of a ring (10), useful for handling the assembly. The railing (9) is fitted within some existing housings on the sides of the platform, and are thus mounted.

Figure 2 shows that the entire horizontal surface (1) is covered by an anti-slip relief layer. Another lateral skirting (4) is also added for the gap (11) formed between the platform and the ladder (where power cables, not shown in the figure, normally run).

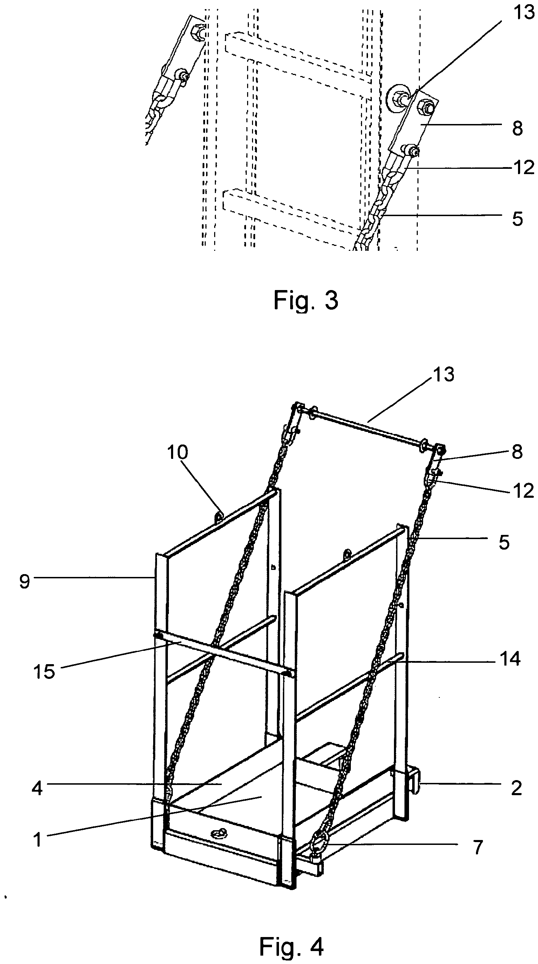

As shown in figure 3, at the end of the chained employed as a tensionable element (5), the last link is fastened to a shackle (12), which, together with the aforementioned plate (8), is coupled to a threaded rod (13) protruding from the rung of the ladder. This threaded rod (13) could form part of the rung or even be a rod inserted into the rung and protruding from both sides, fastened to the sides of the ladder with wide washers and nuts.

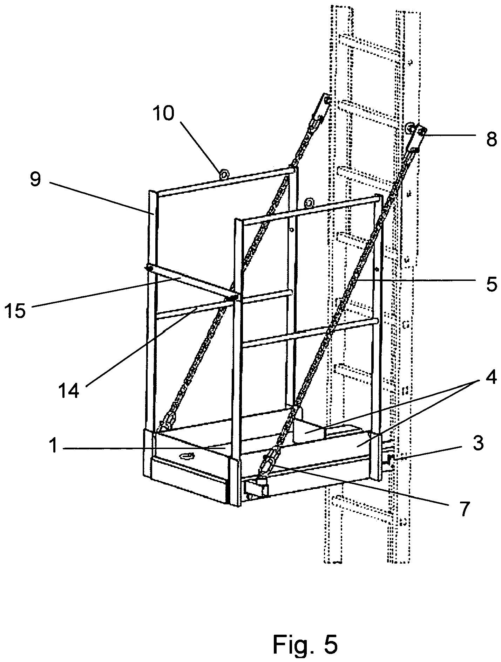

Figures 4 and 5 show the overall platform and its elements, one of which also shows the ladder onto which it will be fastened. The high and slender railings (9) on both sides are reinforced with lateral bars (14). Likewise, both railings (9) are connected with an intermediate plate (15) located at a level above the lateral bars (14) mentioned above.

## Claims

1. Maintenance platform that is installed on a ladder of the sort found inside wind turbine towers, characterized because it consists of
- a horizontal surface (1)
- some anchors (2) located at one end of the cited horizontal surface (1) that are assembled onto any of the rungs on the ladder
- some tensionable elements (5) anchored on one end to the horizontal surface (1) and on the other end screwed in at the ends of a rung, and
- a railing (9) surrounding the three exposed sides of the horizontal surface (1).

2. Maintenance platform according to the 1^{st} claim, characterized because the tensionable elements (5) are chains working with shackles (7) and an eyebolt (6) on the side of the horizontal surface (1), and with a plate (8) that bolts onto a protruding part of the rung or a rod (13) crossing through the rung and protruding at both ends.

3. Maintenance platform according to the 1^{st} claim, characterized because the anchors (2) have safety locks (3) that pass through the lower part of the rung, trapping it.

4. Maintenance platform according to the 1^{st} claim, characterized because the horizontal surface (1) has lateral skirting (4) on all sides and on the gap (11) formed, where the anchors for securing the platform to the ladder are located (2).

5. Maintenance platform according to the 1^{st} claim, characterized because the horizontal surface (1) has a rectangular shape and an anti-slip relief on its upper face.

6. Maintenance platform according to the 1^{st} claim, characterized because the railings (9) have a plate shaped like a lug (10) at its upper part and couple together with intermediate bars (14) and a plate (15).

7. Maintenance platform according to the 1^{st} claim, characterized because all the elements making up the platform are detachable and can be moved.
